(19)
Europäisches
Patentamt
European
Patent Office
Office européen
des brevets

(11) **EP 3 756 762 B1**

(12) **EUROPEAN PATENT SPECIFICATION**

(45) Date of publication and mention
of the grant of the patent:
**06.08.2025  Bulletin 2025/32**

(21) Application number: **19182442.4**

(22) Date of filing: **25.06.2019**

(51) International Patent Classification (IPC):
**B01L 3/00** (2006.01)    **G01N 27/447** (2006.01)
**G02B 26/00** (2006.01)    **B41J 2/14** (2006.01)
**G01N 33/543** (2006.01)    **B01F 33/302** (2022.01)

(52) Cooperative Patent Classification (CPC):
**B01L 3/502792; B01F 33/3021; B01L 3/502761;**
**G01N 27/44791; G02B 26/005;** B01L 2300/0663;
B01L 2300/0816; B01L 2300/0867; B01L 2300/161;
B01L 2400/0427; B41J 2002/14395

(54) **METHOD OF MANIPULATING DROPLETS IN A MICROFLUIDIC DEVICE**

VERFAHREN ZUR MANIPULATION VON TROPFEN IN EINER MIKROFLUIDISCHEN
VORRICHTUNG

MÉTHODE DE MANIPULATION DE GOUTTELETTES DANS UN DISPOSITIF MICROFLUIDIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**30.12.2020  Bulletin 2020/53**

(73) Proprietor: **Sharp Life Science (EU) Limited**
**Oxford OX4 4GB (GB)**

(72) Inventors:
• **ANDERSON, Sally**
**Oxford, Oxfordshire OX4 4GB (GB)**
• **HADWEN, Benjamin James**
**Oxford, Oxfordshire OX4 4GB (GB)**
• **KWANG, Stan**
**Oxford, Oxfordshire OX4 4GB (GB)**

(74) Representative: **EIP**
**Fairfax House**
**15 Fulwood Place**
**London WC1V 6HU (GB)**

(56) References cited:
**EP-A1- 2 047 266**     **EP-A1- 2 911 788**
**US-A1- 2018 356 430**     **US-B2- 8 293 339**

• **ANNE MARTEL ET AL: "Handling of artificial**
**membranes using electrowetting-actuated**
**droplets on a microfluidic device combined with**
**integrated pA-measurements",**
**BIOMICROFLUIDICS, vol. 6, no. 1, 15 March 2012**
**(2012-03-15), pages 012813, XP055568032, DOI:**
**10.1063/1.3665719**
• **JASON L. POULOS ET AL: "Electrowetting on**
**dielectric-based microfluidics for integrated lipid**
**bilayer formation and measurement", APPLIED**
**PHYSICS LETTERS, vol. 95, no. 1, 6 July 2009**
**(2009-07-06), US, pages 013706, XP055568036,**
**ISSN: 0003-6951, DOI: 10.1063/1.3167283**

**EP 3 756 762 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Processed by Luminess, 75001 PARIS (FR)

## Description

### Technical Field

The present invention relates to a microfluidic device, and to a method of manipulating fluid droplets in such a device. More particularly, the invention relates to an Electro-wetting on Dielectric (EWOD) microfluidic device such as, for example, an Active Matrix Electro-wetting on Dielectric (AM-EWOD) microfluidic device. Electro-wetting-On-Dielectric (EWOD) is a known technique for manipulating droplets of fluid on an array. Active Matrix EWOD (AM-EWOD) refers to implementation of EWOD in an active matrix array incorporating transistors, for example by using thin film transistors (TFTs).

### Background Art

Microfluidics is a rapidly expanding field concerned with the manipulation and precise control of fluids on a small scale, often dealing with sub-microlitre volumes. There is growing interest in its application to chemical or biochemical assays and synthesis, both in research and production, and applied to healthcare diagnostics ("lab-on-a-chip"). In the latter case, the small nature of such devices allows rapid testing at point of need using much smaller clinical sample volumes than for traditional lab-based testing.

A microfluidic device can be identified by the fact that it has one or more channels (or more generally gaps) with at least one dimension less than 1 millimeter (mm). Common fluids used in microfluidic devices include whole blood samples, bacterial cell suspensions, protein or antibody solutions and various buffers. Microfluidic devices can be used to obtain a variety of interesting measurements including molecular diffusion coefficients, fluid viscosity, pH, chemical binding coefficients and enzyme reaction kinetics. Other applications for microfluidic devices include capillary electrophoresis, isoelectric focusing, immunoassays, enzymatic assays, flow cytometry, sample injection of proteins for analysis via mass spectrometry, PCR amplification, DNA analysis, cell manipulation, cell separation, cell patterning and chemical gradient formation. Many of these applications have utility for clinical diagnostics.

Many techniques are known for the manipulation of fluids on the sub-millimetre scale, characterised principally by laminar flow and dominance of surface forces over bulk forces. Most fall into the category of continuous flow systems, often employing cumbersome external pipework and pumps. Systems employing discrete droplets instead have the advantage of greater flexibility of function.

Electro-wetting on dielectric (EWOD) is a well-known technique for manipulating discrete droplets of fluid by application of an electric field. It is thus a candidate technology for microfluidics for lab-on-a-chip technology. An introduction to the basic principles of the technology can be found in "Digital microfluidics: is a true lab-on-a-chip possible?" (R. B. Fair, Microfluid Nanofluid (2007) 3:245-281).

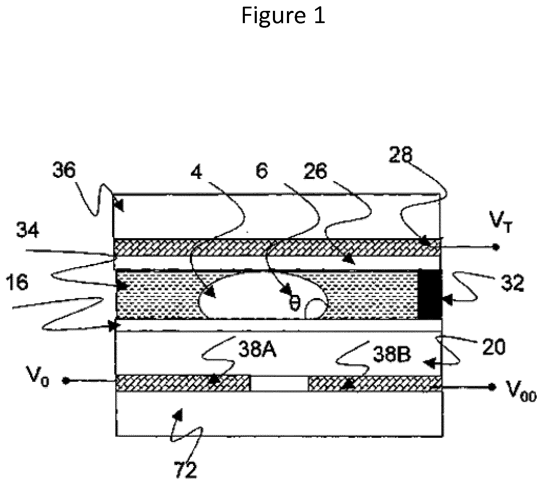

Figure 1 shows a part of a conventional EWOD device in cross section. The device includes a lower substrate 72, on which is provided a conductive material which is patterned so that a plurality of array element electrodes 38 (e.g., 38A and 38B in Figure 1) are realized. The electrode of a given array element may be termed the element electrode 38. The liquid droplet 4, including a polar material (which is commonly also aqueous and/or ionic), is constrained in a plane between the lower substrate 72 and a top substrate 36. A suitable gap between the two substrates may realize a fluid chamber between the two substrates, created, for example, by means of a spacer 32. A non-polar fluid 34 (e.g. oil) may be used to occupy that part of the volume of the fluid chamber not occupied by the liquid droplet 4. An insulator layer 20 disposed upon the lower substrate 72 separates the conductive element electrodes 38A, 38B from a first hydrophobic coating 16 upon which the liquid droplet 4 sits with a contact angle 6 represented by θ. The hydrophobic coating is formed from a hydrophobic material (commonly, but not necessarily, a fluoropolymer).

On the top substrate 36 is a second hydrophobic coating 26 with which the liquid droplet 4 may come into contact. Interposed between the top substrate 36 and the second hydrophobic coating 26 is a reference electrode 28.

The droplets have a contact angle 6 with the hydrophobic surface of the insulator layer. The contact angle 6 is determined by the balancing of the surface tension components (1) from the hydrophobic surface to the liquid of the droplets ($\gamma SL$) interface, (2) from the liquid of the droplets to the surrounding fluid medium ($\gamma LG$) interface, and (3) from the hydrophobic surface to the surrounding fluid medium ($\gamma SG$) interface. Where no voltages are applied, the contact angle 6 satisfies Young's law, and is of size θ given by the equation:

$$\cos \theta = ((\gamma SG - \gamma SL) / \gamma LG) \qquad \text{(Equation 1)}.$$

In operation, voltages termed the EW drive voltages, (e.g. $V_T$, $V_0$ and $V_{00}$ in Figure 1) may be externally applied to different electrodes (e.g. reference electrode 28, element electrodes 38, 38A and 38B, respectively). The resulting electrical forces that are set up effectively control the hydrophobicity of the hydrophobic coating 16. By arranging for different EW drive voltages (e.g. $V_0$ and $V_{00}$) to be applied to different element electrodes (e.g. 38A and 38B), the liquid droplet 4 may be moved in the lateral plane between the two substrates 72 and 36.

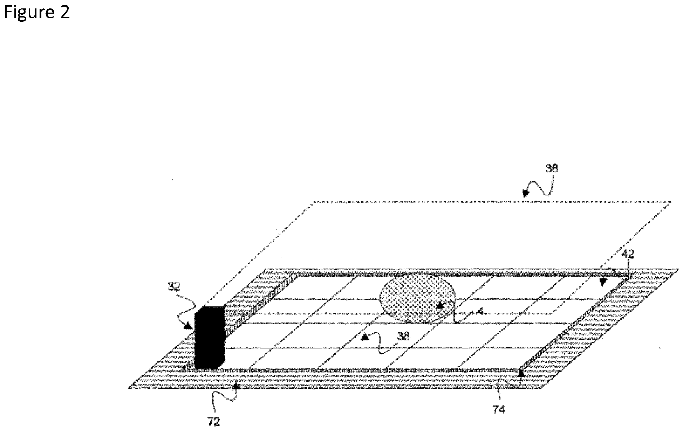

Fig. 2 is a drawing depicting additional details of an exemplary AM-EWOD device in schematic perspective, which may incorporate the layered structures in Fig. 1. The AM-EWOD device has a lower substrate 72 with thin film electronics 74 disposed upon the lower substrate 72, and a reference electrode (not shown, but comparable to reference electrode 28 above) is incorporated into an upper substrate 36 (corresponding to the upper substrate of figure 1). (Alternatively the electrode configuration may be reversed from that shown in figure 2, with the thin film electronics being incorporated into the upper substrate and the reference electrode being incorporated into the lower substrate.) The thin film electronics 74 are arranged to drive array element electrodes 38 - for example the thin film electronic 74 associated with an array element electrode may comprise one or more thin-film transistors (TFTs) that are controlled by an EWOD control unit (not shown). A plurality of array element electrodes 38 are arranged in an electrode or element array 42, having X by Y array elements where X and Y may be any integer. A liquid droplet 4 which may include any polar liquid and which typically may be aqueous, is enclosed between the lower substrate 72 and the upper substrate 36 separated by a spacer 32, although it will be appreciated that multiple liquid droplets 4 can be present.

As described above with respect to the representative EWOD structure, the EWOD channel or gap defined by the two substrates initially is filled with the nonpolar filler fluid (eg oil). The liquid droplets 4 including a polar material, i.e., the droplets to be manipulated by operation of the EWOD device, must be inputted_from an external "reservoir" of fluid into the EWOD channel or gap. The external reservoir may for example be a pipette, or may be a structure incorporated into the plastic housing of the device. As the fluid from the reservoir for the droplets is inputted, filler fluid gets displaced and is removed from the EWOD channel.

Example configurations and operation of EWOD devices are described in the following. US 6911132 (Pamula et al., issued June 28, 2005) discloses a two dimensional EWOD array to control the position and movement of droplets in two dimensions. US 6565727 (Shenderov, issued May 20, 2003) further discloses methods for other droplet operations including the splitting and merging of droplets, and the mixing together of droplets of different materials. US 7163612 (Sterling et al., issued Jan. 16, 2007) describes how TFT based thin film electronics may be used to control the addressing of voltage pulses to an EWOD array by using circuit arrangements very similar to those employed in AM display technologies.

EWOD devices are useful for miniaturising and automating biochemical/chemical processes through the manipulation of aqueous droplets in an oil matrix; EWOD devices may be used to split, move, merge and mix droplets. Typically biochemical/chemical workflows involve carrying out a sequence of reactions on biological/chemical samples, with each step involving the merging of one or more droplets containing the reagents necessary for that step with the sample droplet. The process of merging of droplets containing reagents into the sample droplet means that the volume of the sample droplet typically increases as the workflow proceeds, and the reaction droplet's composition becomes the sum of the work flow product(s) and any remaining reactants and by-products. Due to the enclosed nature of EWOD devices the reaction droplet cannot easily be concentrated by conventional concentration techniques such as solvent evaporation. Also, it may be desired to extract one or more components from the reaction droplet, but the enclosed nature of EWOD devices again means that components of the reaction droplet cannot be easily selected and then separated into a second droplet.

Magnets and biomolecule targeting magnetic beads may be used to bind and remove components of a droplet in an EWOD device, but this process may be inefficient and poorly selective.

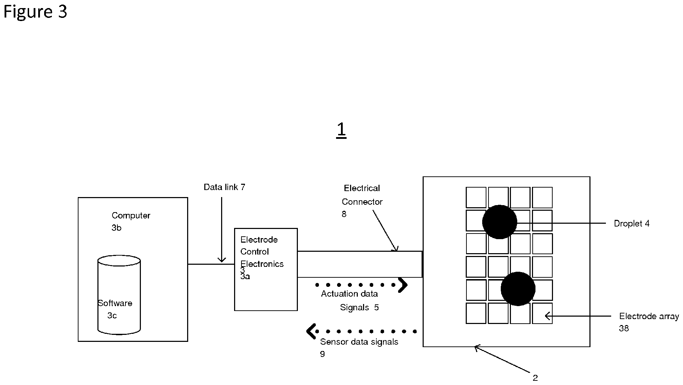

The EWOD device is typically operated as part of a microfluidic system comprising a control system configured to control actuation voltages applied to the electrode array of the EWOD device (or other microfluidic device) to perform manipulation operations to the fluid droplets. For example, Figure 3 is a block schematic diagram of a microfluidic system 1. The system comprises an EWOD (or other microfluidic) device 2, in this example an active matrix EWOD (AM-EWOD) device, and a controller unit 3. The controller unit comprises electrode control electronics 3a and a processor 3b running appropriate software 3c. A storage device (not shown) may store any application software and any data associated with the system. The electrode control electronics generates, under control of the processor 3b, actuation voltages 5 for applying to element electrodes 38 and a common electrode (not shown) of the microfluidic device 2, for example to effect a pre-determined sequence of droplet operations. Figure 3 shows the processor 3b as separate from the control electronics 3a and communicating with the control electronics 3a over a datalink 7, but the processor 3b and the control electronics 3a could alternatively be integral with one another. Figure 3 shows the electrode control electronics 3a as separate from the EWOD device 2 and communicating with the EWOD device via an electrical connector 8, but the control electronics 3a and the EWOD device 2 could alternatively be integral with one another. The control electronics may include suitable circuitry and/or processing devices that are configured to carry out various control operations relating to control of the EWOD device, such as a CPU, microcontroller or microprocessor.

The control electronics 3a may further receive data signals 9 from one or more sensors (not shown) of the EWOD device 2. The sensor data signals 9 may include signals obtained by operating the EWOD array elements in a sensing mode, and/or may include signals obtained by one or more sensors external to the EWOD array elements such as some or all of illumination and/or detection optics, a thermal control unit or magnetic systems for interacting with the droplets 4.

EP 2 047 266 proposes a method of forming bilayers of amphipathic molecules that uses droplets of aqueous solution in a hydrophobic medium such as oil. A layer of amphipathic molecules such as a lipid is formed around the surfaces of the droplets. This may be achieved by providing the lipid in the oil and leaving the droplets for a time sufficient to form the layer. The droplets are brought into contact with one another so that a bilayer of the amphipathic molecules is formed as an interface between the contacting droplets. The bilayers may be used for a wide range of studies.

A Martel et al., in "Handling of artificial membranes using electrowetting-actuated droplets on a microfluidic device combined with integrated pA-measurements", BIOMICROFLUDICS Vol. 6, No. 1, p 012813 (2012), propose the fabrication and characterization of a microfluidic device integrating electrophysiology measurements and the handling of an artificial membrane which includes its formation, its displacement and the separation of its leaflets using electrowetting actuation of sub-$\mu$L droplets. To validate this device, they recorded the insertion of a model porin, a-hemolysin.

US 2018/356430 proposes a method for analysing the activity of an ion channel comprising: providing in a hydrophobic medium a first droplet of an aqueous solution AS1 comprising a concentration q of an ion I with $c1 \geq 0$, wherein the droplet is surrounded by a monolayer of amphiphilic molecules; providing in the hydrophobic medium a second droplet of an aqueous solution AS2 comprising a concentration c2 of the ion I with $c2 \geq 0$, and $c2 \neq c1$, wherein the second droplet is surrounded by a monolayer of amphiphilic molecules further comprising the ion channels to an analyzed; bringing the first droplet and the second droplet into contact so as to form a bilayer of amphiphilic molecules, wherein the bilayer further comprises ion channels to be analyzed, and measuring the radius of the two droplets when they are brought into contact referred to as initial state; and maintaining the first droplet and the second droplet in contact until equilibrium is reached and measuring the radius of the two contacted droplets or determining the number of resulting droplet(s) at the equilibrium state, wherein the ion channel is inactive when the difference of the radius of at least one droplet between its initial state and its equilibrium state is at least 10% or when only one droplet is obtained at the equilibrium state.

## Summary

In a comparative method of manipulating droplets in an electro-wetting on dielectric (EWOD) device that does not form part of the invention, the EWOD device having first and second substrates defining a fluid chamber therebetween and a plurality of electro-wetting electrodes, the method comprising selectively actuating the electro-wetting electrodes to: cause first and second droplets in a fluid medium in the fluid chamber of the EWOD device to contact each other to form a droplet interface bilayer, the first droplet containing fluid of a first composition including a first solvent species and the second droplet containing fluid of a second composition, the second composition being different to the first composition and containing a higher osmolarity solute, than the first composition and so having a higher osmotic pressure; maintain the first and second droplets contacting each other to maintain the droplet interface bilayer and thereby allow a solvent species to pass from the first droplet to the second droplet via the droplet interface bilayer; and cause the first droplet to separate from the second droplet. (The "osmolarity" of a solution is a measure of the solute particle concentration, and is explained further below.)

This method results in transfer of solvent from the first droplet to the second droplet, whereby the fluid in the first droplet becomes more concentrated and the fluid in the second droplet becomes more diluted. This provides a convenient way of altering the concentration in a fluid droplet within an EWOD device. For example, the first droplet may be a reaction droplet that has been obtained via a sequence of reaction steps involving merging of droplets, so that the reaction droplet's composition has become the sum of the work flow product(s) and any remaining reactants and by-products. The invention allows the reaction droplet to be concentrated before the droplet undergoes further reaction steps.

This method also results in a reduction in size of the first droplet by the transfer of solvent from the first droplet to the second droplet, and an increase in the size of the second droplet. This method may alternatively be used to adjust the size of a droplet within an EWOD device, for example to reduce the size of a droplet (for example to increase its speed of movement within the EWOD device, or to prepare the droplet for removal from the EWOD device), or otherwise to adjust the size of a droplet to be equal to a desired size for any desired reason. This provides a way to make droplets of sizes that would otherwise not be possible for a given EWOD device geometry. For the successful splitting off of a daughter droplet from a main droplet, the daughter droplet has a minimum droplet diameter about 3 x the cell gap height - i.e. as defined by the spacer 32 in figure 1 - and it is difficult to reliably obtain a daughter droplet with a diameter less than this minimum diameter.

A first aspect of the disclosure provides a method of manipulating droplets in an electro-wetting on dielectric (EWOD) device, the EWOD device having first and second substrates defining a fluid chamber therebetween and a plurality of electro-wetting electrodes, the method comprising: selectively actuating the electro-wetting electrodes to: cause first and second droplets in a fluid medium in the fluid chamber of the EWOD device to contact each other to form a droplet interface bilayer, the first droplet containing fluid of a first composition including a first solute species and the second droplet containing fluid of a second composition different to the first composition, maintain the first and second droplets contacting each other to maintain the droplet interface bilayer and thereby allow the first solute species to pass from the first droplet to the second droplet via the DIB; and cause the first droplet to separate from the second droplet.

A method of this aspect results in transfer of solute from the first droplet to the second droplet. This provides a convenient way of altering the concentration of a particular component or components in a fluid droplet within an EWOD device. For example, the first droplet may be a reaction droplet that has been obtained via a sequence of reaction steps involving merging of droplets, so that the reaction droplet's composition has become the sum of the work flow product(s) and any remaining reactants and by-products. This aspect allows, for example, an undesired solute species to be extracted from the reaction droplet or the undesired solute species to be diluted in the reaction droplet before the droplet undergoes further reaction steps, allows the reaction droplet to be provided/replenished with a desired solute species before the droplet undergoes further reaction steps, and/or allows a solute species to be extracted from the reaction droplet for analysis or to undergo further reaction steps.

A transporter species for promoting passage through the droplet interface bilayer of the first solute species may be provided in the first droplet and/or in the second droplet. When the droplet interface bilayer is formed the transporter species is incorporated into the DIB, and allows the first solute species to pass through the DIB while selectively preventing one or more other species from passing (for example if the first solute species is a relatively small molecule, transport of the first solute species may be facilitated by a transmembrane species that allows smaller molecules to pass while selectively preventing a larger molecule from being transported). One example of a suitable transporter species is a transmembrane transporter protein.

WO2018/067878 provides disclosure of both biological pores and solid state pores. The person skilled in the art would recognise that such species may be utilised as nanopores in the droplet interface bilayers of the present invention.

The first droplet may further contain a second solute species and the transporter species is arranged to block transfer via the droplet interface bilayer of the second solute species.

The method may comprise actuating the electro-wetting electrodes to maintain the droplet interface bilayer between the first droplet and the second droplet for a sufficient time to allow the solute concentration of the first droplet to become equalised between the first droplet and the second droplet.

The method may comprise, while actuating the electro-wetting electrodes to maintain the first and second droplets contacting each other to maintain the droplet interface bilayer, promoting transfer of the first solute species from the first droplet to the second droplet.

The method may comprise selectively actuating the electro-wetting electrodes to promote transfer of the first solute species from the first droplet to the second droplet.

The method may comprise inducing an electrochemical or chemical gradient across the droplet interface bilayer to promote transfer of the first solute species from the first droplet to the second droplet.

The method may comprise thermally or optically promoting transfer of the first solute species from the first droplet to the second droplet

The method may comprise providing a magnetic field gradient across the droplet interface bilayer to promote transfer of the first solute species from the first droplet to the second droplet

The second droplet may contain fluid of a second composition including a third solute species, and a second transporter species for promoting passage through the DIB of molecules of the third solute species may be provided in the first droplet and/or in the second droplet thereby enabling the third solute species to pass from the second droplet to the first droplet via the droplet interface bilayer.

The method may comprise, while actuating the electro-wetting electrodes to cause the first and second droplets to contact each other to form the droplet interface bilayer, further actuating the electro-wetting electrodes to: cause a third droplet to contact the first droplet to form a second droplet interface bilayer, the third droplet containing fluid of a third composition different to the first composition, the third composition having the same osmotic pressure as the first composition, wherein a second transporter species for promoting passage through the second droplet interface bilayer of a fourth solute species is provided in the first droplet and/or in the third droplet, and maintain the first and third droplets contacting each other to maintain the second droplet interface bilayer and thereby allow the fourth solute species to pass from the first droplet to the third droplet via the droplet interface bilayer. In this embodiment the fourth solute species may be the same as the first solute species, although this embodiment is not limited to this.

The method may comprise, while actuating the electro-wetting electrodes to cause the first and second droplets to contact each other to form a droplet interface bilayer, further selectively actuating the electro-wetting electrodes to: cause a third droplet to contact the second droplet to form a second droplet interface bilayer, the third droplet containing fluid of a third composition different to the first composition, the third composition having the same osmotic pressure as the first composition, wherein a transporter species for promoting passage through the second DIB of the first solute species is provided in the second droplet and/or in the third droplet, and maintain the second and third droplets contacting each other to maintain the second droplet interface bilayer and thereby allow the first solute species to pass from the first droplet to the second droplet via the droplet interface bilayer and from the second droplet to the third droplet via the second droplet interface bilayer.

The method may comprise further selectively actuating the electro-wetting electrodes to: retrieve the second droplet.

Preferred embodiments of the present invention will now be described by way of illustrative examples with reference to the accompanying figures, in which:

Fig. 1 is a schematic cross-sectional view of an EWOD device;
Fig. 2 is a schematic perspective view of an EWOD device;
Fig. 3 is a schematic view of an EWOD system;
Fig. 4a is a schematic illustration of the formation of a droplet interface bilayer (DIB) from two droplets;
Fig. 4b is a schematic illustration of a droplet interface bilayer with a transporter to facilitate the selective transport of molecules through the lipid bilayer;
Fig. 5 is a schematic illustration of a first comparative method that is not part of the present invention;
Fig. 6 is a schematic illustration of a second comparative method that is not part of the present invention;
Fig. 7 is a schematic illustration of a third comparative method that is not part of the present invention;
Fig. 8 is a schematic illustration of a fourth comparative method that is not part of the present invention;
Fig. 9 is a schematic illustration of a fifth comparative method that is not part of the present invention;
Figs. 10(a) to 10(c) are schematic cross-sectional views through an EWOD device at different stages of a method of the first comparative method;
Fig. 11 is a schematic illustration of a method according to a first embodiment of the present invention; and
Figs. 12 (a) to (d) are further illustrations of methods according to the first embodiment.

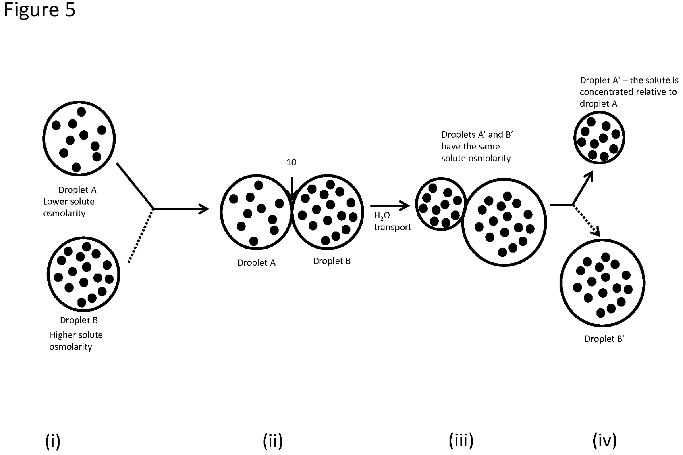

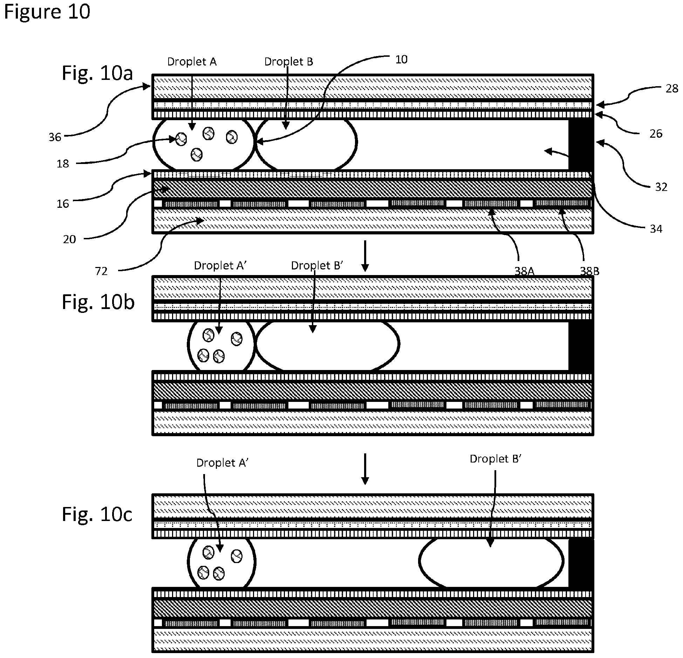

Fig. 5 illustrates a method that is not part of the invention, for varying the concentration of fluid in a droplet in a microfluidic device such as an AM-EWOD device. Initially, two fluid droplets, Droplet A, 4A, and Droplet B, 4B are present in the fluid space of the EWOD device, as shown by the pair of droplets in figure 5(i). Typically Droplet A and Droplet B are droplets of polar fluid and are disposed in a non-polar filler fluid (such as oil) disposed in the fluid space of the EWOD device, as shown generally in figure 1. The filler fluid is not shown in Fig. 5, but is shown in, for example, Fig. 10a-10c (described further below). Droplet A and Droplet B are controlled so as to be brought together as shown in Fig. 5(ii). The droplets may be manipulated so as to be brought together by appropriate actuation of electrodes of the EWOD device (in the case of an AM-EWOD device by appropriate actuation of the array element electrodes of the AM-EWOD device).

As used herein, specifying that a first droplet and a second droplet "may be manipulated so as to be brought together by appropriate actuation of the array element electrodes of the EWOD device" cover a case where array element electrodes of the EWOD device are actuated to hold the first droplet stationary and move the second droplet into contact with the first droplet, a case where array element electrodes of the EWOD device are actuated to hold the second droplet stationary and move the first droplet into contact with the second droplet, and a case where array element electrodes of the EWOD device are actuated to move the first droplet and to move the second droplet so that the first and second droplets make contact with one another.

Droplet A contains fluid (eg liquid) of a first composition that includes at least a first solute species in a first solvent. In the case of polar fluid droplets the first solvent is typically water although it could be another polar solvent such as methanol. The second droplet, droplet B, contains fluid (eg liquid) of a second composition that is different to the composition of the fluid of droplet A. The fluid in droplet B contains one or more solute species in a solvent, and the fluid of droplet B has a higher overall solute osmolarity than the fluid of droplet A.

As used herein, a "solute" is a substance that is dissolved in another substance, known as a "solvent" to form a mixture known as a "solution". As would be understood by someone skilled in the art, a substance may be made up of atoms, molecules or ions, therefore a solute may be molecular, ionic or polymeric. The concentration or molarity of a substance or a solute is defined as the number of moles of a substance or solute per litre of solvent, whereas the osmolarity of a solution is a measure of the number of osmoles of solute particles rather than moles of solute. The distinction arises because some substances can dissociate in solution whereas others cannot. For example an ionic solid dissolves in a solvent to generate dissociated solvated ions, and there may not be a one to one relationship between the molarity and the osmolarity of a solution. For example, sodium chloride (NaCl) dissociates into Na+ and Cl- ions. For every 1 mole of NaCl in solution, there are 2 osmoles of solute particles (i.e., a 1 mol/L NaCl solution is a 2 osmol/L NaCl solution). Both sodium and chloride ions affect the osmotic pressure of the solution. In non-ideal solutions solutes may interact with one another thus reducing the osmolarity of a solution. In general the concentration of the solute in the solution is lower than the concentration of the solvent in the solution.

The solvent in droplet B will generally be the same solvent as the first solvent in droplet A, although the invention is in principle not limited to this. As a result, the solution in droplet B has a higher osmotic pressure than droplet A. (In a case where the solvent (second solvent) in droplet B is not the same as the solvent (first solvent) in droplet A, it is possible that the DIB between droplet A and droplet B will be permeable to both the first solvent and the second solvent, so that the two resultant droplets include both the first solvent and the second solvent - if a droplet having methanol as its solvent and a droplet having water as its solvent were to form a droplet interface bilayer, as an example, one would expect that the DIB would be permeable to both water and methanol. After formation of the DIB, each droplet would therefore be likely to contain a mixture of the first and second solvents. The solute composition of the droplets will depend on the permeability of the DIB to the solute(s) present in the initial droplets.)

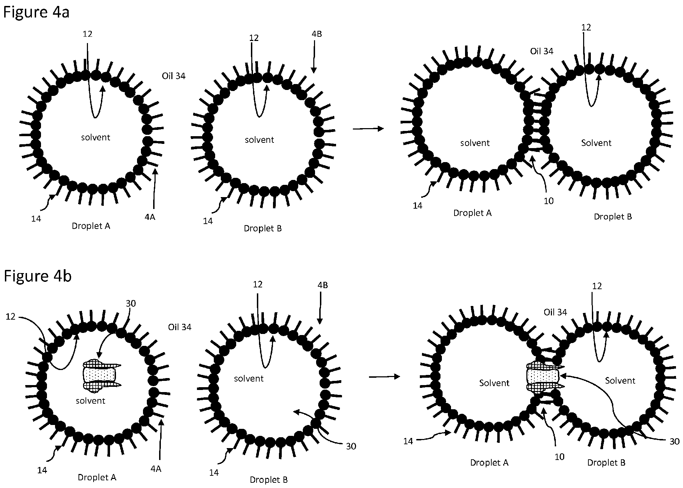

According to the method of Fig. 5, Droplet A and Droplet B are manipulated to come together in such a way that they do not merge into a single droplet, but instead form a droplet interface bilayer (DIB) at their interface. Formation of a droplet interface bilayer is shown in more detail in Fig. 4a. Two droplets 4A and 4B of a polar fluid (such as an aqueous fluid) are disposed in a non-polar fluid 34 such as oil. Each droplet is surrounded by a monolayer of amphiphilic molecules 12, such as a lipid monolayer. Fig. 4a shows the lipid monolayer being formed by amphiphilic molecules 14 arranged such that their oil-soluble tails project into the filler fluid 34, while the water soluble ends of the amphiphilic molecules remain in contact with the aqueous fluid in the droplets. Amphiphilic molecules used to make up the DIB maybe introduced from either the droplet (using the 'lipid in" method) or the filler fluid (using the 'lipid-out' method). (The "lipid in" and "lipid out" methods are well known techniques for forming DIBs, and are described in, for example, "Sensors and Actuators B: Chemical", 2013, 185 pp530 to 542.) A wide range of amphiphilic molecules can be used to form lipid monolayers; including lipids, surfactants and detergents examples of polymer surfactants are diblock and triblock copolymers (but the invention is not limited to these).

When the two droplets are manipulated, for example by electrowetting in an EWOD device, so as to come together, the amphiphilic molecules 14 of one droplet interact with the amphiphilic molecules of another droplet so that the amphiphilic monolayers of the two droplets form a droplet interface bilayer 10 as shown in the right view of Fig. 4a. Formation of a droplet interface bilayer is a reversible process, and the two droplets may subsequently be manipulated to separate from one another - provided that they do not merge into a single droplet.

The droplet interface bilayer 10 forms a semi-permeable membrane, so that small molecules are able to pass from one droplet, through the droplet interface bilayer, into the second droplet whereas larger molecules cannot easily pass through the droplet interface bilayer 10. Provided that the molecules of the polar solvent in droplet A are small - for example if the solvent is water or methanol - solvent molecules are able to pass through the droplet interface bilayer. The difference in the osmotic pressure of the solutions in droplet A and droplet B results in the movement of solvent molecules from Droplet A across the droplet interface bilayer 10 into Droplet B.

The solute species in Droplet A and Droplet B are typically large molecules, charged molecules or ions, and cannot pass through the droplet interface bilayer or can pass through the DIB but at a much lower rate than the rate at which solvent molecules can pass through the DIB. For example it is likely that a solute species comprising ions or highly charged molecules would not be able to pass through a DIB, whereas dye molecules that are neutral or have a small charge would probably pass through a DIB, but at a low rate. The transport properties of a DIB depend inter alia on the structure of the DIB, and which surfactants have been used in its formation.

As a result, solvent passes from Droplet A to Droplet B across the droplet interface bilayer, as shown schematically in Fig. 5 (iii). The black dots in Fig. 5 represent solute particles and, as explained, these cannot cross the droplet interface bilayer and so remain in Droplet A or in Droplet B. As a result of the transfer of solvent from Droplet A to Droplet B while the solute molecules are retained, the fluid in Droplet A becomes more concentrated - that is, the solute concentration increases - while the fluid in Droplet B becomes more dilute.

The rate at which solvent passes from Droplet A to Droplet B across the droplet interface bilayer will depend inter alia on the difference in osmotic pressure between the fluid in Droplet A and the fluid in Droplet B when the DIB forms between Droplet A and Droplet B. Typically the difference in osmotic pressure between the fluid in Droplet A and the fluid in Droplet B is greater than approximately 5 kPa (equivalent to 1 mM sodium chloride solution) at room temperature. Additionally or alternatively, the difference in osmotic pressure between the fluid in Droplet A and the fluid in Droplet B is typically less than 50 MPa (equivalent to 10 M sodium chloride solution) at room temperature.

If the droplet interface bilayer 10 is maintained for a sufficiently long time the process of solvent transfer from Droplet A to Droplet B will continue until the fluid in Droplet A has the same total solute osmolarity as the fluid in Droplet B, and there is no longer an osmotic pressure difference between the solutions in the droplets making up the droplet interface bilayer. Typically it takes of the order of a few hours for the solute osmolarity in the two droplets to become equal.

The resultant droplets - now referred to as Droplet A' and Droplet B' in recognition of their changed fluid compositions - may then be manipulated by electrowetting to separate them from one another as shown in Fig. 5 (iv). The result of the method of Fig. 5 is that Droplet A' contains fluid that has been concentrated relative to the initial fluid in Droplet A, whereas Droplet B' contains fluid that has been diluted relative to the initial fluid contained in Droplet B.

The method of Fig. 5 can be used to manipulate the fluid concentration of a droplet in an EWOD device. As mentioned above, the enclosed nature of an EWOD device means that it is difficult or impossible to apply conventional methods of concentrating the fluid in a droplet in an EWOD device. The method of Fig. 5 is, however, straightforward and reliable to perform in an EWOD device.

In a practical application of the method of figure 5, one droplet of either Droplet A or Droplet B will be a "target" droplet whose fluid concentration it is desired to change, and the other droplet is used to effect the desired change in the fluid concentration of the target droplet. The description of Fig. 5 above has assumed that Droplet A is the 'target droplet', and that the method is intended to concentrate the fluid contained in this droplet. The method of Fig. 5 may alternatively be used to dilute the fluid contained in a droplet - in this case, Droplet B would be the 'target droplet'.

Once Droplet A' and Droplet B' have been separated from one another, each droplet may then be separately manipulated as desired. In particular, the modified target droplet may be subjected to further reactions, by merging the droplet with one or more further droplets containing the reagent or reagents necessary for a further reaction step. Additionally or alternatively, the 'unwanted' droplet produced by the method of Fig. 5 may be moved out of the active area of the EWOD device for storage or removal.

Further details of the formation of a droplet interface bilayer are given in, for example, Scientific Reports 2016, 6, 39349, 1-9, "In vitro synthesis of Major Facilitator Transporter for specific active transport across Droplet Interface Bilayers" by H Findlay et al. This describes selective transport through DIBs formed at the interface between droplets encased in amphiphilic molecules and the concept of functionalising DIBs with transporters, generating DIB networks and controlling the flow of molecular information in artificial cell systems. Electrowetting as a method of forming and breaking DIBs between droplets is the subject of co-pending UK patent application No. 1721649.0. Electrowetting has been described as a method for making and breaking DIBs, for example in Biomicrofluidics 2012, 012813. Osmosis driven transport across a DIB is proposed as a method of concentrating the content of a droplet and of inducing protein crystallisation in the droplet in Cryst Eng Comm 2012, 14(23), 7865-7868.

Fig. 10(a) to 10(c) are cross-sectional views through an EWOD device (in this example an AM-EWOD device) showing three stages of the method of Fig. 5. Fig. 10(a) corresponds to Fig. 5(ii), and shows the droplet interface bilayer 10 formed after Droplet A and Droplet B have been manipulated to contact one another.

In this example Droplet A contains solute molecules of interest 18, and it is desired to extract solvent (for example water) from Droplet A. Droplet B has a higher overall solute osmolarity than the overall solute osmolarity of Droplet A., The solution in droplet B therefore has a higher osmotic pressure than the solution in droplet A, where the osmotic pressure of a solution is the minimum pressure which needs to be applied to a sample of that solution to prevent the flow of its pure solvent across a semipermeable membrane and into the sample, and is a measure of the tendency of a solution to take in its pure solvent by osmosis across a semipermeable membrane.

It is not necessary for Droplet B to contain any of the solute molecules of interest 18, as long as Droplet B has a higher overall solute osmolarity than the overall solute osmolarity of Droplet A. Droplet B may, for example, contain a solution of salt (sodium chloride) so that its overall solute osmolarity is higher than that of Droplet A.

Also, Droplet A may contain further solute species in addition to the solute molecules of interest 18, for example salt, again provided that Droplet B has a higher overall solute osmolarity than the overall solute osmolarity of Droplet A.

Fig. 10(b) corresponds to Fig. 5(iii), and illustrates the process of transfer of solvent (for example water) from Droplet A to Droplet B across the droplet interface bilayer 10. The molecules of interest 18 in droplet A, and other solute species in droplet A or droplet B, may not cross the droplet interface bilayer (or can cross the DIB at a much slower rate than can the solvent molecules). The permeability of the DIB depends on its structure and on the type or types of amphiphilic molecule or molecules from which the droplet interface bilayer is formed, and on the polarity of the solute molecule crossing the DIB. Less polar solute molecules e.g. fluorescein may traverse the droplet interface bilayer more easily than a more polar solute molecule e.g. calcein, however fluorescein is transported more slowly than small molecules e.g. water.

Once the transfer of solvent from Droplet A to Droplet B is complete, or is complete to a desired degree, the two droplets may then be manipulated by electrowetting to separate the two droplets and break the droplet interface bilayer as shown in Fig. 10(c) (which corresponds to figure 5(iv)). Each droplet may then be manipulated separately, as desired.

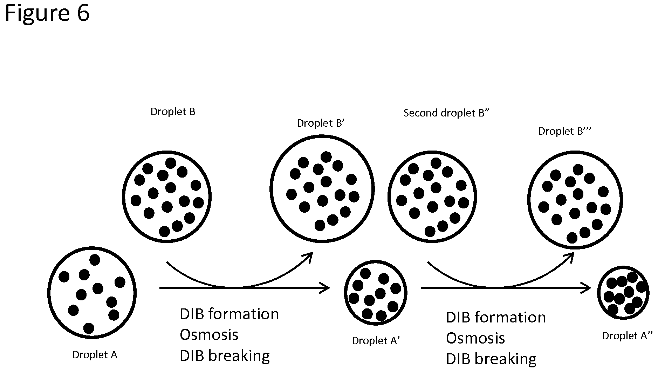

As explained above, the method of Fig. 5 is able to extract solvent from Droplet A until the two droplets have an equal overall solute osmolarity to one another, and therefore equal osmotic pressure. If it is desired to further reduce the solvent concentration (and therefore increase the concentration of the components) of Droplet A', this may be done using a multi-stage process as shown in Fig. 6.

In the method of Fig.6, a target Droplet A (for example containing molecules of interest) and a Droplet B, which has a higher overall solute osmolarity than Droplet A, are manipulated by electrowetting so as to contact one another and form a droplet interface bilayer. Solvent then passes from Droplet A to Droplet B as explained with reference to Fig. 5, to yield a Droplet A' that has a higher overall solute concentration than droplet A. Droplet A' and Droplet B' may then be manipulated to break the droplet interface bilayer and separate the two droplets.

A further droplet, Droplet B", is then manipulated to come into contact with Droplet A' and form another droplet interface bilayer. Droplet B" has an overall higher solute osmolarity than the overall solute osmolarity of Droplet A'. As a result, further solvent is extracted from Droplet A' into Droplet B", to yield a resultant droplet, Droplet A", that has an overall solute concentration that is higher than the overall solute concentration of Droplet A'. The process also yields a droplet B‴, that contains solvent extracted from droplet A'. The droplet A" and droplet B‴ may then be manipulated by electrowetting to separate from one another and break the droplet interface bilayer, and each droplet may then be manipulated separately.

If further reduction of the solvent content of Droplet A" is required, this can be done by one or more further stages of manipulating Droplet A" and a yet further Droplet B‴‴ (not shown) to contact one another, and form a droplet interface bilayer to allow further solvent to flow from Droplet A" into Droplet B‴‴.

In the method of Fig. 6, the second droplet B" may have any overall solute osmolarity that allows further solvent to be extracted from droplet A'. The droplet B" may have the same composition and total solute osmolarity as droplet B, or it may have a different composition and/or a different total solute osmolarity.

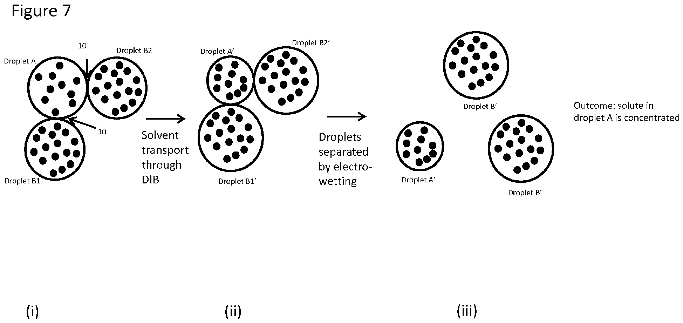

Fig. 7 is a schematic illustration of a third comparative method. This method corresponds generally to the method of Fig. 5, except that solvent is extracted from Droplet A into more than one further droplet at the same time - Fig. 7(i) shows extraction of solvent into two further droplets, Droplet B1 and Droplet B2, at the same time but solvent could in principle be extracted into three or more further droplets at the same time. This may be done by manipulating Droplet A and Droplet B1 by electrowetting to contact one another and form a first droplet interface bilayer, and subsequently manipulating (a) the pair of droplets A + B1 that have formed the first droplet interface bilayer and (b) Droplet B2 to come into contact with one another and form a second droplet interface bilayer between droplets A and B2. Alternatively, in principle, Droplets A, B1 and B2 may be manipulated by electrowetting so that Droplet B1 and Droplet B2 make contact with Droplet A at substantially the same time to form respective droplet interface bilayers. Solvent is then transferred out of Droplet A into both Droplet B1 and Droplet B2, through the respective droplet bilayers 10 - Fig. 7 (ii). Provided that the droplet bilayers are maintained for sufficient time, the solvent transfer will continue until all droplets have the same solute osmolarity and the solutions the droplet contain have the same osmotic pressure, to give resultant Droplet A', Droplet B1' and Droplet B2'. The droplets are then separated from one another - Fig. 7(iii) - as described with reference to Fig. 5.

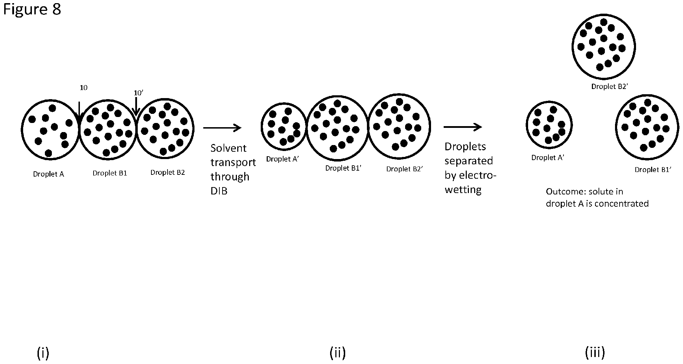

Fig. 8 is a schematic illustration of fourth comparative method, which is again a modification of the method of Fig. 5. In the method of figure 8 multiple droplets, Droplet B1 and Droplet B2, are again used to extract solvent from a target droplet, droplet A - but one droplet interface bilayer 10 is between Droplet A and Droplet B1, and another droplet interface bilayer is between Droplet B1 and Droplet B2 as shown in Fig. 8(i). This droplet configuration may for example be obtained by manipulating Droplet A and Droplet B1 by electrowetting to contact one another and form a droplet interface bilayer, and then manipulate the combined Droplet A + B1 and the Droplet B2 such that B1 and B2 come in contact with one another and form the second droplet interface bilayer 10'. Solvent is transported across the droplet interface bilayer 10 from Droplet A to Droplet B1, and from the Droplet B1 across the second droplet interface bilayer 10' to the Droplet B2 - Fig. 8(ii). Provided that the droplet bilayers are maintained for sufficient time, the solvent transfer will continue until all droplets have the same solute osmolarity and so the solutions that the droplets contain have the same osmotic pressure, to yield Droplet A', Droplet B1' and Droplet B2'. The three droplets may then be manipulated by electrowetting to separate the droplets from one another - Fig. 8(iii) - and each droplet may then be separately further manipulated as desired.

In one implementation of the method of figure 8 Droplet B1 and Droplet B2 have the same initial overall solute osmolarity as one another, which is higher than the overall solute osmolarity of the fluid in Droplet A. Even though there is initially no difference in osmotic pressure between Droplet B1 and Droplet B2, as soon as solvent is transferred from Droplet A to Droplet B1 this reduces the overall solute osmolarity in Droplet B1, thus setting up a difference in osmotic pressure between the contents of Droplet B1 and the contents of Droplet B2 to drive the transfer of solvent from Droplet B1 to Droplet B2.

Fig. 8 shows an method in which two droplets, Droplet B1 and Droplet B2, are used to extract solvent from Droplet A. In principle however the method of figure 8 could use more than two droplets to extract solvent from Droplet A. For example, a third droplet interface bilayer could be formed between Droplet B2 and a further droplet, so that solvent is transported from the Droplet B2 across the third droplet interface bilayer to the further droplet.

Further methods may combine features of Fig. 7 and Fig. 8. As an example, in a modification of figure 8, two droplets, Droplet B2a and Droplet B2b, could be used to extract solvent from droplet B1 across respective DIBs between Droplet B2a or B2b and Droplet B1.

The methods of Fig. 5 to 8 have been described with reference to a desire to concentrate the fluid in droplet A, and in which the overall solute osmolarity of Droplet B, Droplet B1 and/or Droplet B2 have been chosen so that solvent flows from Droplet A into Droplet B, Droplet B1 and/or Droplet B2. The methods of Figs. 5 to 8 may however be used to dilute the concentration of the fluid in droplet A, by arranging for Droplet B, Droplet B1 and/or Droplet B2 to have a lower total solute osmolarity than Droplet A so that solvent flows across the droplet interface bilayer into Droplet A rather than being extracted from Droplet A.

In any of the methods of Figs. 5 to 8, one of the droplets may contain a chemical species that assists in the transport of solvent molecules across the droplet interface bilayer 10, 10'. Transmembrane proteins e.g. Aquaporins are one example of a suitable species, as these preferentially position themselves in a droplet interface bilayer and facilitate the transport of water molecules across the droplet interface bilayer. Aquaporins have been shown to insert into synthetic membranes and facilitate the transport of water through the membrane as described by Manish Kumar, Mariusz Grzelakowski, Julie Zilles, Mark Clark, and Wolfgang Meier, in Highly permeable polymeric membranes based on the incorporation of the functional water channel protein Aquaporin Z. Proceedings of the National Academy of Sciences, 2007, 104, 20719-20724.

The methods of Figs. 5 to 8 have many potential applications. As explained, these methods enable the osmolarity of fluid in a droplet within an EWOD device to be increased or decreased, despite the enclosed nature of the EWOD device, by enabling the transport of polar solvent molecules, such as water, across the droplet interface bilayer from a droplet having a low overall solute osmolarity to a droplet of higher overall solute osmolarity. Molecules of interest such as biomolecules, in the target droplet are not transported across the droplet interface bilayer. Thus, provided that the transfer of solvent across the droplet interface bilayer is allowed to continue until the overall solute osmolarity of the two droplets are equal, it is possible to calculate the new composition of the target droplet after the solvent transfer, provided that its initial osmolarity and size are known and the osmolarity and size of the other droplet(s) used in the solvent transfer. For example the droplet size may be monitored over time, for example using an EWOD device impedance sensor or other sensor, until it is observed that the droplet size has stopped changing which indicates that the transfer of solvent from one droplet to another has ceased.

Alternatively, the osmolarity of a particular species could alternatively be measured using a range of methods e.g. electrochemical, optical (absorption and fluorescence) measurements etc. In such cases the new composition of the target droplet may be determined even if the transfer of solvent across the droplet interface bilayer is stopped (by breaking the DIB and separating the droplets) before the overall solute osmolarity of the two droplets have become equal.

If a greater change in the composition of the fluid than can be achieved in one single solvent transfer operation is required, the solvent transfer operation may be repeated (Fig. 6), or may be carried out using multiple droplets B1, B2 (Fig. 7 or Fig. 8). Further, the solvent transfer operation of figure 7 or 8 may be repeated if desired.

In addition to removing solvent from the target droplet A, the effect of transferring solvent out of the target droplet A is to reduce its physical size, as shown schematically in Figs. 5 to 8. Another application of the invention is therefore to generate a droplet of smaller size than it would otherwise be possible to generate in a particular EWOD device. In general, it is found that, when a droplet is formed by splitting off in an EWOD device, the minimum diameter, parallel to the plane of the fluid gap of the EWOD device, of droplet that can be obtained is approximately three times the thickness of the droplet - that is approximately three times the cell gap thickness between the upper and lower hydrophobic coatings 16, 26 in Fig. 1, as described in Cho SK, Moon H, Kim C-J. Creating, transporting, cutting, and merging liquid droplets by electrowetting-based actuation for digital microfluidic circuits. J Microelectromech Syst. 2003;12:70-80. Thus, in a given EWOD device, there is a minimum size of droplet that can be formed in the EWOD device by conventional EWOD techniques, as determined by the cell gap thickness.

The methods of the present invention make it possible to generate a droplet having a diameter, parallel to the plane of the cell gap, that is less than the minimum diameter that would normally be obtained for a given cell gap - once a droplet has been provided in the cell gap of an EWOD device, its diameter may be reduced by extracting solvent from the droplet according to any of the methods described herein.

In principle the droplet size may be reduced to any desired size, for example chosen based on the subsequent manipulation/processing intended for the droplet. As example, in one method the droplet diameter may be reduced to be the same or approximately the same as the dimension of an electrode array element of the EWOD device in which the droplet is contained. As noted above, the cell gap as defined by the height of the spacer (32) determines the size of a droplet that can be generated in an AM-EWOD device by EWOD forces. Therefore, for smaller array element electrodes (38) the minimum size of a droplet that can be moved by EWOD cannot be generated by EWOD but is accessible by volume reduction via a DIB. Small droplet sizes - and hence small droplet volumes - are particularly useful for applications that involve manipulation of cells and where large numbers of droplets are required. The length or width of an array element could be typically $200\mu m$, or $100\mu m$ or $50\mu m$, depending on the design of the device. On actuation of a single array element underneath the droplet, the droplet remains in contact with both the top and bottom substrates of the EWOD device and can therefore be moved by electrowetting.

In principle, the droplet diameter could even be made smaller than the dimension of an electrode array element of the EWOD device in which the droplet is contained, but such a droplet could not be manipulated by EWOD manipulation techniques. The minimum size of droplet that can be moved by EWOD forces has a diameter such that the droplet approximately covers a single conductive element electrode (38A, 38B).

In general, the speed with which a fluid droplet can be moved in an EWOD device increases as the size of the droplet decreases. Thus, the limit on the minimum diameter of a droplet that can be obtained in a given EWOD device by conventional EWOD techniques also leads to an upper limit on the possible speed of movement of fluid droplets in that EWOD device. As well as making it possible to concentrate or dilute the fluid composition of a droplet within an EWOD device, the present application therefore, also makes it possible to obtain a greater speed of droplet movement as a result of its ability to decrease the physical size of a droplet.

The present invention may also be used to make small adjustments to the size of a droplet within an EWOD device. Once a droplet has been dispensed into the cell gap of the EWOD device, its size may be adjusted so that the droplet has a desired target diameter - which may be less than or greater than the original diameter of the droplet as dispensed.

A further application of methods of the invention relates to the detection and/or measurement of properties of a droplet. When a biochemical or chemical workflow is being performed through the manipulation of aqueous droplets in an EWOD device, it is often desired to measure properties of a droplet in order to determine whether or to what extent a reaction has occurred. Examples of droplet measurement/detection techniques include optical measurements such as absorption or fluorescence, measurements of the pH of the fluid, measurements of the electrical conductivity of the droplet (which provides a measure of the ionic content of the droplet), and measurement of the speed of movement induced in a droplet for a given actuation voltage. These and other detection techniques may be made more reliable if the fluid composition of the droplet is concentrated using a method of the invention before the measurement is made. For example, in the case of an optical absorption or fluorescence measurement being made on a droplet, the optical absorption or fluorescence signal is expected to be more intense for higher solute concentrations of the droplet.

A further possible application of the invention is in making it possible to stop, or slow, a particular biochemical or chemical reaction occurring in a droplet. For example, some reactions can be slowed or even stopped by increasing the concentration of salt in the fluid in which the reaction is occurring - so extracting solvent from a droplet as described herein may also be used as a way of controlling or reducing the speed of (and possibly stopping) a reaction, by increasing the concentration of salt or other solute species in the droplet.

As set out above, methods of the invention may be used to reduce the volume of a droplet, by extracting solvent from the droplet. A further application of this technique is in reducing the volume of a droplet before it is extracted from the EWOD device, so that the droplet has the correct volume for further measurements to be made on the droplet. This can be more convenient and easier than attempting to reduce the size of a droplet after it has been extracted from the EWOD device.

In a further application of methods of the invention, solvent may initially be extracted from a target droplet according to any of the methods described herein. Solvent may then be reintroduced into the droplet, by bringing the droplet into contact with a droplet having a low total solute osmolarity. This process may be useful in mixing the contents of a droplet that has been formed by merging two or more constituent droplets. If two or more constituent droplets are merged it is possible that the resultant droplet will not have a uniform fluid composition over its volume, and this can lead to inaccuracy in further processing steps on the droplet. The process of removing solvent from the droplet and then re-introducing further solvent will promote the mixing of the droplet constituents to give a more uniform composition.

Such a solvent exchange technique may also be used to change the solvent composition of a droplet. For example, one polar solvent (for example water) may be removed from a droplet, and a different polar solvent (such as methanol) may be introduced into the droplet.

A method of the invention may be used to concentrate the composition of a fluid droplet at any point in a sequence of droplet operations (or "workflow"). For example, it may be used to concentrate an initial sample droplet provided in an EWOD device so as to reduce its size, to allow enough room on the AM-EWOD electrode array to manipulate multiple samples in parallel. The manipulating may include droplet splitting and mixing. Samples loaded onto a device may come from various sources and it may not be convenient or possible for the user to preconcentrate a sample for loading onto the AM EWOD device. Large volume droplets will take up considerable space in the AM EWOD device, and reducing the size of the droplets by a method of the invention may be a convenient way to increase the number of samples that may be processed in parallel in a given EWOD device. The droplets used to concentrate the target droplet(s) could be removed from the device before the workflow is carried out.

Additionally or alternatively, a method of the invention may be used to remove solvent from, or add solvent to, an initial sample droplet in order to generate sample droplets with the correct concentration of a particular component required for a particular workflow. Again this addresses the problem that samples loaded onto a device may come from various sources and have different concentrations.

As a further example, the invention may be applied to the final droplet obtained in a chemical or biochemical workflow, to concentrate the final droplet before extraction of a particular volume of droplet fluid for further analysis.

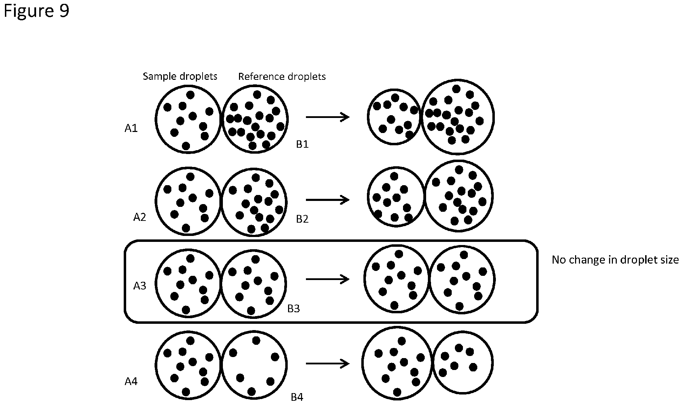

Another application of methods of the invention is described with reference to Fig. 9. In this example, multiple sample droplets A1...A4 are manipulated by electrowetting to form a respective droplet interface bilayer with a respective reference droplet B1... B4. The sample droplets A1 to A4 all have the same, unknown solute osmolarity, whereas the reference droplets B1-B4 have solute osmolarities that are known and that are different to one another. In the example of Fig. 9, droplet B1 has the highest overall solute osmolarity of the droplets B1-B4, and the droplet B4 has the lowest. Further, it is assumed that the droplet B3 has a solute osmolarity that is approximately equal to the solute osmolarity of the sample droplets A1-A4. As a result, as shown schematically in the right-hand part of Fig. 9, there is little or no transfer of solvent from/into droplet A3, and the size of droplet A3 stays approximately constant (as does the size of droplet B3). In contrast, droplets A1 and A2 reduce in size since reference droplets B1, B2 have a higher overall solute concentration than droplets A1 and A2, whereas sample droplet A4 increases in size since it has a higher solute osmolarity than reference droplet B4. It is therefore possible to obtain information about the concentration of the sample droplets A1-A4, by monitoring what change in size is caused by each of the reference droplets B1 to B4. The change in size of the droplets may be measured by any suitable measurement technique including, for example, capacitive measurements made by the array elements of the EWOD device, or measurements made by an external sensor such as an optical sensor.

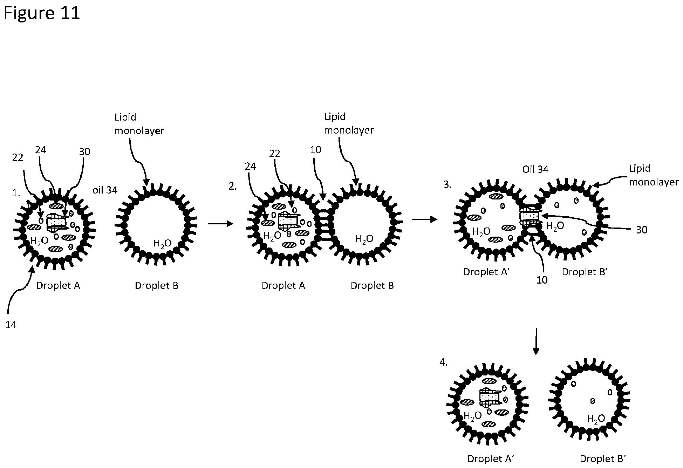

Fig. 11 shows a method according to an embodiment of the present invention. As with other methods, the method of Fig 11 again relates to the transfer of constituents of a droplet from one droplet to another via a droplet interface bilayer between the two droplets. In the method of Fig. 11, however, one or more solute species is transferred from one droplet to another.

In the first stage of the method of Fig. 11, Droplet A and Droplet B are manipulated by electrowetting in an EWOD device, for example an AM-EWOD device, to bring the two droplets into contact with one another so that a droplet interface bilayer forms between Droplet A and Droplet B as shown in the second stage of figure 11. In the example of Fig 11 Droplet A contains two solute species 22, 24, and it is desired to extract one solute species 22 from droplet A while not extracting the other solute species 24.

Optionally, at least one of Droplet A and Droplet B - in this example Droplet A - includes a "transporter" species 30 that will insert, or can be inserted, into the droplet interface bilayer to selectively allow the transfer of solute species 22 while blocking the transfer of solute species 24. Stage 3 of Fig. 11 shows the transporter species 30 inserted into the droplet interface bilayer

As a result, solute species 22 transfers from Droplet A to Droplet B while solute species 24 is retained in Droplet A as shown in stage 3 of Fig. 11. This transfer process is driven by the concentration gradient of the solute species 22 across the droplet interface bilayer and, if the droplet interface bilayer is maintained for sufficient time, will continue until the concentration of the solute species 22 in one droplet (now referred to as Droplet A' in recognition of its changed composition) is equal to the concentration of the solute species 22 in the other droplet (now referred to as Droplet B'). Once this equilibrium is reached, or at any desired time beforehand, the two droplets may be manipulated by electrowetting so as to separate from one another, as shown in stage 4 of Fig. 11. Droplet A' and/or Droplet B' may then be further manipulated as desired. For example, Droplet B' may be moved to another area of the EWOD device to allow the solute species 22 to be used in another reaction, for example involving merging droplet B with a droplet containing a further reagent.

In the method of Fig. 11, examples of a suitable species 30 for insertion in the droplet interface bilayer include, for example, self-inserting toxins (such as α Haemolysin) membrane channels (such as potassium ion channels), small molecule and metabolite transporters (such as from the major facilitator super family such as lactose permease (lacY) metabolite transporters).

The transporter species 30 may be a size-selective transporter species - that is, the species 30 may allow transfer of molecules below a certain size and block transfer of larger molecules. Alternatively, the transporter species 30 may be selective in that it permits transfer of solute species having a particular functional group and blocks transfer of solute species that do not include the required functional group. Such a transporter species may be considered as a "passive" transporter species, in that transfer of a species that is permitted to pass by the transporter species 30 is driven by the concentration gradient across the droplet interface bilayer. Alternatively the transporter species 30 may be an "active" transporter species, which can transfer a solute at a greater rate than if driven solely by the concentration gradient and may even transfer solute against a concentration gradient. The transporter species could be a transmembrane protein or other molecule that facilitates the otherwise unfavourable transport of polar compounds or ions through a lipid bilayer, for example as described by Heather E. Findlay, Nicola J. Harris & Paula J. Booth in "In vitro synthesis of a Major Facilitator Transporter for specific active transport across Droplet Interface Bilayers", Scientific Reports 2016, 6, 39349..

The transfer of the solute species 22 from Droplet A to Droplet B may be driven solely by the concentration gradient of the solute species 22 across the droplet interface bilayer, and this may be considered as a 'passive' transfer process - as noted, this transfer process will continue until the concentration of the solute species 22 in one droplet is equal to the concentration of the solute species 22 in the other droplet. In other implementations of the method of figure 11 the transfer of the solute species 22 may be further driven by an "active transfer mechanism" that causes the rate of transfer of the solute species 22 across the droplet interface bilayer to be greater than the transfer rate that would arise from the concentration gradient. An active transfer mechanism may for example use one or more of an electric field across the droplet interface bilayer (for example generated by the array element electrodes of the EWOD device), an electrochemical gradient across the droplet interface bilayer, a chemical gradient across the droplet interface bilayer, a thermal gradient, an optically-induced gradient across the droplet interface bilayer, a magnetic field across the droplet interface bilayer etc.

In principle, an active transport mechanism - the use of an "active" transporter species and/or the use of an active transfer mechanism - may even allow transport of a target molecule in the direction opposed to the concentration gradient and therefore against the direction of diffusion. Thus, for example, an active transporter species which facilitates an active transport mechanism may be incorporated into the embodiment of figure 11 so that, even after the concentration of the solute species 22 in one droplet has become equal to the concentration of the solute species 22 in the other droplet, transfer of solute species 22 to Droplet B' can be continued. In principle this would allow the transfer of the solute species 22 into droplet B' to be continued until all solute species 22 has been removed from droplet A'.

Additionally or alternatively transfer of the solute species 22 may be promoted by providing a sequestering agent for the solute species 22 in the recipient droplet, droplet B. The presence of the sequestering agent is effective to prevent the concentration of the solute species 22 in the recipient droplet increasing, or at least to reduce the rate of increase of its concentration, and thus allow further solute species 22 to be transferred to the recipient droplet before the concentrations of the solute species 22 in the two droplets become equal to one another.

Depending on the intended application of the method of Fig. 11, it may be preferable for the solution in droplet A and droplet B to have the same osmotic pressure as one another, that is, to have the same overall solute concentration as one another. If the solutions in the two droplets have different osmotic pressures to one another, solvent transfer will occur from one droplet to the other while the two droplets are in contact and the droplet interface bilayer is present.

In the method of Fig. 11 the fluid composition of the droplets A and B may include any polar liquid as solvent, such as water. The solute species may include one or more of DNA molecules, RNA molecules, peptide molecules, protein molecule, metabolites, small neutral molecules, ions, pharmaceutical drugs etc.

If desired, the droplets may be monitored during the process of transfer of the solute species 22 from Droplet A to Droplet B to determine whether, and if so to what extent, transfer of the solute species 22 is occurring. Examples of techniques for monitoring transport across the droplet interface bilayer include, without limitation:

- the pH of the droplets may be measured by a pH sensor provided in/on the EWOD device;
- the electrical conductivity of one or more droplets may be measured, for example using the array element electrodes 38A, 38B and the common electrode 26;
- one or more optical properties of the droplet may be measured, such as absorption or fluorescence;
- the viscosity of one or both droplet may be measured, to detect changes in viscosity arising from the transfer of the solute species 22;
- sensing changes in the droplet sizes arising during the process of transfer of the solute species 22 from Droplet A to Droplet B - although Fig. 11 does not show any change in droplet size occurring, there may be some change in droplet sizes. Any change in droplet size will depend on the permeability of the lipid bilayer and the osmotic pressures of the solutions of the droplets.

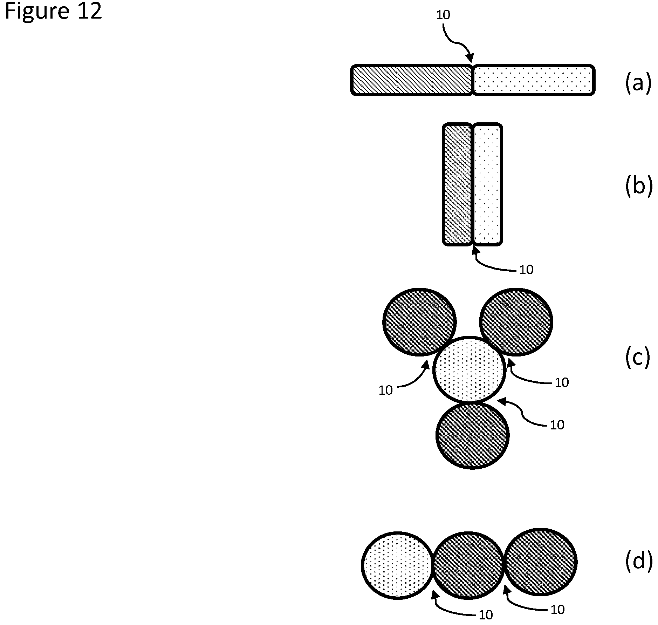

The method of Fig. 11 is not limited to the particular droplet geometry shown in Fig. 11, and droplets having a non-circular geometry (when seen from above in Fig. 12a or Fig. 12b) may be used. Figures 12a and 12b show two other possible DIB geometries and illustrate how the size of the DIB may be controlled by EWOD manipulation of droplets. If the droplets are actuated then the size of the DIB may be varied while the volume of the droplets is constant - for example in figure 12a the two droplets are essentially rectangular in plan and have been manipulated to come together such that a short face of one droplet is adjacent a short face of the other droplet so that a relatively small area DIB is formed. In figure 12b however the same two droplets have been manipulated to come together such that a long face of one droplet is adjacent a long face of the other droplet so that a larger area DIB is formed. All other factors being equal, the larger DIB in Fig. 12b will result in faster transport from one droplet to another than will the smaller DIB in Fig. 12a. Controlling the size of the DIB that is formed between the two droplets, for example by controlling the orientation of the two droplets as they come together to form the DIB thus allows control over the speed of transport from one droplet to the other.

The method of Fig. 11 has been described with reference to transfer of a solute species 22 from one donor droplet, Droplet A, to one recipient droplet, Droplet B. However, the method is not limited to this and a solute species may be transferred from a donor droplet to multiple recipient droplets as described with reference to Fig. 7 above, and this is shown schematically in Fig. 12c. Alternatively, a solute species may be transferred to two (or more) recipient droplets arranged in series with one another as described above with reference to Fig. 8, and this is shown schematically in Fig. 12d.

As a further alternative, the process shown in Fig. 11, Fig. 12(c) or Fig. 12(d) may be repeated sequentially over time, by bringing the droplet A' into contact with a further recipient droplet and repeating the process.

In the method shown in Fig. 11 solute species 22 is extracted from droplet A, thereby reducing the concentration of this solute species in droplet A. A corresponding method may be used if it is desired to increase the concentration of solute species 22 in Droplet A - in this modified embodiment Droplet B would contain solute species 22 at a higher concentration than Droplet A. The solute species 22 would transfer from Droplet B into Droplet A after formation of the droplet interface bilayer and insertion of the transporter species 30, thereby enabling the concentration of solute species 22 in Droplet A to be increased. (Indeed, if an active transport mechanism were used to promote transfer of solute species 22 from Droplet B into Droplet A, solute species 22 could in principle be transferred into droplet A even if Droplet B initially contained solute species 22 at a lower (but non-zero) concentration than Droplet A.)

In a further modified embodiment, a further solute species, different to solute species 22 and solute species 24, may be introduced into droplet A, by arranging for droplet B to contain the further solute species.

In the method of Fig. 11 either droplet A' or droplet B' may be manipulated for use in further reaction steps. In one application solute species 22 may be the desired component, and droplet B containing the extracted solute species 22 may be taken onto the next step of the reaction. In another application, however, it may be that solute species 24 is the desired species, and that solute species 22 is undesired (and may be detrimental to the next step of the reaction). In this scenario, droplet A', that contains solute species 24 and a reduced concentration of solute species 22, may be taken to the next step of the reaction process.

While the embodiment of Fig.11 is described with reference to an example in which at least one of Droplet A and Droplet B includes a "transporter" species 30 that will insert, or can be inserted, into the droplet interface bilayer to selectively allow the transfer of solute species 22 while blocking the transfer of solute species 24, the provision of a transporter species is not required in all applications of the method of Fig. 11. Some molecules may be selectively transported through poreless lipid bilayers so, dependent on the composition of the droplet interface bilayer and/or dependent on the solute species to be transported, in some cases it may be possible to effect the method of Fig. 11 even without a transporter species inserted into the droplet interface bilayer.

## Claims

1. A method of manipulating droplets in an electro-wetting on dielectric (EWOD) device, the EWOD device having first and second substrates (36,72) defining a fluid chamber therebetween and a plurality of electro-wetting electrodes (38,38A,38B), the method comprising
selectively actuating the electro-wetting electrodes (38,38A,38B) to:

   cause first and second droplets (A,B; 4A,4B) in a fluid medium (34) in the fluid chamber of the EWOD device to contact each other to form a droplet interface bilayer (10), the first droplet (A;4A) containing fluid of a first composition including a first solute species (22) and the second droplet (B;4B) containing fluid of a second composition different to the first composition; and
   maintain the first and second droplets contacting each other to maintain the droplet interface bilayer and thereby allow the first solute species (22) to pass from the first droplet (A;4A) to the second droplet (B;4B) via the droplet interface bilayer (10); and
   cause the first droplet (A;4A) to separate from the second droplet.

2. A method as claimed in claim 1 wherein a transporter species (30) for promoting passage through the droplet interface bilayer (10) of the first solute species (22) is provided in the first droplet (A;4A) and/or in the second droplet (B;4B).

3. A method as claimed in claim 2, wherein the first droplet (A;4A) further contains a second solute species (24) and the transporter species (30) is arranged, when incorporated into the droplet interface bilayer (10), to block transfer via the droplet interface bilayer of the second solute species (24).

4. A method as claimed in claim 1, 2 or 3 and comprising actuating the electro-wetting electrodes to maintain the droplet interface bilayer (10) between the first droplet (A;4A) and the second droplet (B;4B) for a sufficient time to allow the solute concentration of the first droplet to become equalised between the first droplet (A;4A) and the second droplet (B;4B).

5. A method as claimed in any preceding claim and further comprising, while actuating the electro-wetting electrodes to maintain the first and second droplets contacting each other to maintain the droplet interface bilayer, promoting transfer of the first solute species (22) from the first droplet (A;4A) to the second droplet (B;4B).

6. A method as claimed in claim 5 and comprising selectively actuating the electro-wetting electrodes to promote transfer of the first solute species (22) from the first droplet (A;4A) to the second droplet (B;4B).

7. A method as claimed in claim 5 or 6 and comprising inducing an electrochemical or chemical gradient across the droplet interface bilayer to promote transfer of the first solute species (22) from the first droplet (A;4A) to the second droplet (B;4B).

8. A method as claimed in claim 5, 6 or 7 and comprising thermally or optically promoting transfer of the first solute species (22) from the first droplet (A;4A) to the second droplet (B;4B).

9. A method as claimed in claim 5, 6, 7 or 8 and comprising providing a magnetic field gradient across the droplet interface bilayer to promote transfer of the first solute species (22) from the first droplet (A;4A) to the second droplet (B;4B).

10. A method as claimed in any preceding claim wherein the second droplet (B;4B) contains fluid of a second composition including a third solute species, and a second transporter species for promoting passage through the droplet interface bilayer of molecules of the third solute species is provided in the first droplet (A;4A) and/or in the second droplet (B;4B) thereby enabling the third solute species to pass from the second droplet (B;4B) to the first droplet (A;4A) via the droplet interface bilayer.

11. A method as claimed in any preceding claim and comprising, while actuating the electro-wetting electrodes to cause the first and second droplets to contact each other to form the droplet interface bilayer (10), further actuating the electro-wetting electrodes to:

cause a third droplet to contact the first droplet (A;4A) to form a second droplet interface bilayer, the third droplet containing fluid of a third composition different to the first composition, the third composition having the same or similar osmotic pressure as the first composition, wherein a second transporter species for promoting passage through the second droplet interface bilayer of a fourth solute species is provided in the first droplet (A;4A) and/or in the third droplet, and

maintain the first and third droplets contacting each other to maintain the second droplet interface bilayer and thereby allow the fourth solute species to pass from the first droplet (A;4A) to the third droplet via the second droplet interface bilayer.

**12.** A method as claimed in any one of claims 1 to 12 and comprising, while actuating the electro-wetting electrodes to cause the first and second droplets to contact each other to form a droplet interface bilayer, further selectively actuating the electro-wetting electrodes to:

cause a third droplet to contact the second droplet (B;4B) to form a second droplet interface bilayer, the third droplet containing fluid of a third composition different to the first composition, the third composition having the same or similar osmotic pressure as the first composition, wherein a transporter species for promoting passage through the second droplet interface bilayer of the first solute species is provided in the second droplet (B;4B) and/or in the third droplet, and

maintain the second and third droplets contacting each other to maintain the second droplet interface bilayer and thereby allow the first solute species to pass from the first droplet (A;4A) to the second droplet (B;4B) via the droplet interface bilayer (10) and from the second droplet (B;4B) to the third droplet via the second droplet interface bilayer.

**13.** A method as claimed in any preceding claim, comprising further selectively actuating the electro-wetting electrodes to: retrieve the second droplet (B;4B).

**Patentansprüche**

**1.** Verfahren zum Manipulieren von Tröpfchen in einer Elektrobenetzungsvorrichtung auf einem Dielektrikum (EWOD), wobei die EWOD-Vorrichtung ein erstes und ein zweites Substrat (36, 72), die eine Fluidkammer dazwischen definieren, und eine Vielzahl von Elektrobenetzungselektroden (38, 38A, 38B) aufweist, das Verfahren umfassend: selektives Betätigen der Elektrobenetzungselektroden (38, 38A, 38B) **zum:**

Bewirken, dass erste und zweite Tröpfchen (A, B; 4A, 4B) in einem fluiden Medium (34) in der Fluidkammer der EWOD-Vorrichtung miteinander in Kontakt kommen, um eine Tröpfchenschnittstellendoppelschicht (10) zu bilden, wobei das erste Tröpfchen (A; 4A) ein Fluid einer ersten Zusammensetzung enthält, die eine erste gelöste Spezies (22) einschließt, und das zweite Tröpfchen (B; 4B) ein Fluid einer zweiten Zusammensetzung enthält, die sich von der ersten Zusammensetzung unterscheidet; und

Aufrechterhalten des Kontakts zwischen dem ersten und dem zweiten Tröpfchen, um die Tröpfchenschnittstellendoppelschicht aufrechtzuerhalten und dadurch zu ermöglichen, dass die erste gelöste Spezies (22) über die Tröpfchenschnittstellendoppelschicht (10) von dem ersten Tröpfchen (A; 4A) zu dem zweiten Tröpfchen (B; 4B) gelangt; und

Veranlassen des ersten Tröpfchens (A; 4A), sich von dem zweiten Tröpfchen zu trennen.

**2.** Verfahren nach Anspruch 1, wobei eine Transporterspezies (30) zum Fördern des Durchgangs der ersten gelösten Spezies (22) durch die Tröpfchenschnittstellendoppelschicht (10) in dem ersten Tröpfchen (A; 4A) und/oder in dem zweiten Tröpfchen (B; 4B) bereitgestellt wird.

**3.** Verfahren nach Anspruch 2, wobei das erste Tröpfchen (A; 4A) ferner eine zweite gelöste Spezies (24) enthält und die Transporterspezies (30) angeordnet ist, wenn sie in die Tröpfchenschnittstellendoppelschicht (10) eingebaut ist, um den Transfer der zweiten gelösten Spezies (24) über die Tröpfchenschnittstellendoppelschicht zu blockieren.

**4.** Verfahren nach Anspruch 1, 2 oder 3, umfassend das Betätigen der Elektrobenetzungselektroden, um die Tröpfchenschnittstellendoppelschicht (10) zwischen dem ersten Tröpfchen (A; 4A) und dem zweiten Tröpfchen (B; 4B) für eine ausreichende Zeit aufrechtzuerhalten, damit sich die Konzentration der gelösten Stoffe des ersten Tröpfchens zwischen dem ersten Tröpfchen (A; 4A) und dem zweiten Tröpfchen (B; 4B) angleichen kann.

5. Verfahren nach einem der vorstehenden Ansprüche und ferner umfassend das Betätigen der Elektrobenetzungselektroden, um die ersten und zweiten Tröpfchen in Kontakt miteinander zu halten, um die Tröpfchenschnittstellendoppelschicht aufrechtzuerhalten, das Fördern des Transfers der ersten gelösten Spezies (22) vom ersten Tröpfchen (A; 4A) zum zweiten Tröpfchen (B; 4B).

6. Verfahren nach Anspruch 5, umfassend das selektive Betätigen der Elektrobenetzungselektroden, um den Transfer der ersten gelösten Spezies (22) vom ersten Tröpfchen (A; 4A) zum zweiten Tröpfchen (B; 4B) zu fördern.

7. Verfahren nach Anspruch 5 oder 6, umfassend das Induzieren eines elektrochemischen oder chemischen Gradienten über die Tröpfchenschnittstellendoppelschicht, um den Transfer der ersten gelösten Spezies (22) vom ersten Tröpfchen (A; 4A) zum zweiten Tröpfchen (B; 4B) zu fördern.

8. Verfahren nach Anspruch 5, 6 oder 7, umfassend das thermische oder optische Fördern des Transfers der ersten gelösten Spezies (22) von dem ersten Tröpfchen (A; 4A) zu dem zweiten Tröpfchen (B; 4B).

9. Verfahren nach Anspruch 5, 6, 7 oder 8, und umfassend das Bereitstellen eines Magnetfeldgradienten über die Tröpfchenschnittstellendoppelschicht, um den Transfer der ersten gelösten Spezies (22) vom ersten Tröpfchen (A; 4A) zum zweiten Tröpfchen (B; 4B) zu fördern.

10. Verfahren nach einem der vorstehenden Ansprüche, wobei das zweite Tröpfchen (B; 4B) ein Fluid einer zweiten Zusammensetzung enthält, die eine dritte gelöste Spezies einschließt, und eine zweite Transporterspezies zur Förderung der Passage von Molekülen der dritten gelösten Spezies durch die Tröpfchenschnittstellendoppelschicht im ersten Tröpfchen (A; 4A) und/oder im zweiten Tröpfchen (B; 4B) bereitgestellt wird, wodurch die dritte gelöste Spezies in die Lage versetzt wird, über die Tröpfchenschnittstellendoppelschicht vom zweiten Tröpfchen (B; 4B) zum ersten Tröpfchen (A; 4A) zu gelangen.

11. Verfahren nach einem der vorstehenden Ansprüche und umfassend, während des Betätigens der Elektrobenetzungselektroden, um zu bewirken, dass die ersten und zweiten Tröpfchen miteinander in Kontakt kommen, um die Tröpfchenschnittstellendoppelschicht (10) zu bilden, ferner das Betätigen der Elektrobenetzungselektroden zum:

Bewirken, dass ein drittes Tröpfchen mit dem ersten Tröpfchen (A; 4A) in Kontakt kommt, um eine zweite Tröpfchenschnittstellendoppelschicht zu bilden, wobei das dritte Tröpfchen ein Fluid einer dritten Zusammensetzung enthält, die sich von der ersten Zusammensetzung unterscheidet, wobei die dritte Zusammensetzung den gleichen oder einen ähnlichen osmotischen Druck wie die erste Zusammensetzung aufweist, wobei eine zweite Transporterspezies zum Fördern des Durchgangs einer vierten gelösten Spezies durch die zweite Tröpfchenschnittstellendoppelschicht in dem ersten Tröpfchen (A; 4A) und/oder in dem dritten Tröpfchen bereitgestellt wird, und
Aufrechterhalten des Kontakts zwischen dem ersten und dem dritten Tröpfchen, um die zweite Tröpfchenschnittstellendoppelschicht aufrechtzuerhalten und dadurch zu ermöglichen, dass die vierte gelöste Spezies vom ersten Tröpfchen (A; 4A) über die zweite Tröpfchenschnittstellendoppelschicht zum dritten Tröpfchen gelangt.

12. Verfahren nach einem der Ansprüche 1 bis 12, umfassend, während des Betätigens der Elektrobenetzungselektroden, um zu bewirken, dass die ersten und zweiten Tröpfchen miteinander in Kontakt kommen, um eine Tröpfchenschnittstellendoppelschicht zu bilden, ferner das selektive Betätigen der Elektrobenetzungselektroden zum:

Bewirken, dass ein drittes Tröpfchen mit dem zweiten Tröpfchen (B; 4B) in Kontakt kommt, um eine zweite Tröpfchenschnittstellendoppelschicht zu bilden, wobei das dritte Tröpfchen ein Fluid einer dritten Zusammensetzung enthält, die sich von der ersten Zusammensetzung unterscheidet, wobei die dritte Zusammensetzung denselben oder einen ähnlichen osmotischen Druck wie die erste Zusammensetzung aufweist, wobei eine Transporterspezies zum Fördern des Durchgangs der ersten gelösten Spezies durch die zweite Tröpfchenschnittstellendoppelschicht in dem zweiten Tröpfchen (B; 4B) und/oder in dem dritten Tröpfchen bereitgestellt wird, und
Aufrechterhalten des Kontakts zwischen dem zweiten und dem dritten Tröpfchen, um die zweite Tröpfchenschnittstellendoppelschicht aufrechtzuerhalten und dadurch zu ermöglichen, dass die erste gelöste Spezies über die Tröpfchenschnittstellendoppelschicht (10) vom ersten Tröpfchen (A; 4A) zum zweiten Tröpfchen (B; 4B) und über die zweite Tröpfchenschnittstellendoppelschicht vom zweiten Tröpfchen (B; 4B) zum dritten Tröpfchen gelangen kann.

13. Verfahren nach einem der vorstehenden Ansprüche, ferner umfassend das selektive Betätigen der Elektrobenetzungselektroden zum:
Zurückholen des zweiten Tröpfchens (B; 4B).


**Revendications**

1. Procédé de manipulation de gouttelettes dans un dispositif d'électromouillage sur diélectrique (EWOD), le dispositif EWOD comportant des premier et second substrats (36, 72) définissant une chambre de fluide entre eux et une pluralité d'électrodes d'électromouillage (38, 38A, 38B), le procédé comprenant l'actionnement sélectif des électrodes d'électromouillage (38, 38A, 38B) pour :

amener les première et deuxième gouttelettes (A, B ; 4A, 4B) dans un milieu fluide (34) dans la chambre à fluide du dispositif EWOD à entrer en contact l'une avec l'autre pour former une bicouche d'interface de gouttelettes (10), la première gouttelette (A ; 4A) contenant un fluide d'une première composition comprenant une première espèce de soluté (22) et la deuxième gouttelette (B ; 4B) contenant un fluide d'une deuxième composition différente de la première composition ; et
maintenir les première et deuxième gouttelettes en contact l'une avec l'autre pour maintenir la bicouche d'interface de gouttelettes et permettre ainsi à la première espèce de soluté (22) de passer de la première gouttelette (A ; 4A) à la deuxième gouttelette (B ; 4B) via la bicouche d'interface de gouttelettes (10) ; et
provoquer la séparation de la première gouttelette (A ;4A) de la deuxième gouttelette.

2. Procédé selon la revendication 1, dans lequel une espèce de transporteur (30) pour favoriser le passage à travers la bicouche d'interface de gouttelette (10) de la première espèce de soluté (22) est fournie dans la première gouttelette (A ; 4A) et/ou dans la deuxième gouttelette (B ; 4B).

3. Procédé selon la revendication 2, dans lequel la première gouttelette (A ; 4A) contient en outre une deuxième espèce de soluté (24) et l'espèce de transporteur (30) est agencée, lorsqu'elle est incorporée dans la bicouche d'interface de gouttelette (10), pour bloquer le transfert via la bicouche d'interface de gouttelette de la deuxième espèce de soluté (24).

4. Procédé selon la revendication 1, 2 ou 3 et comprenant l'actionnement des électrodes d'électromouillage pour maintenir la bicouche d'interface de gouttelette (10) entre la première gouttelette (A ; 4A) et la deuxième gouttelette (B ; 4B) pendant une durée suffisante pour permettre à la concentration en soluté de la première gouttelette de s'égaliser entre la première gouttelette (A ; 4A) et la deuxième gouttelette (B ; 4B).

5. Procédé selon une quelconque revendication précédente et comprenant en outre, tout en actionnant les électrodes d'électro-mouillage pour maintenir les première et deuxième gouttelettes en contact l'une avec l'autre pour maintenir la bicouche d'interface de gouttelette, la promotion du transfert de la première espèce de soluté (22) de la première gouttelette (A ; 4A) à la deuxième gouttelette (B ; 4B).

6. Procédé selon la revendication 5 et comprenant l'actionnement sélectif des électrodes d'électro-mouillage pour favoriser le transfert de la première espèce de soluté (22) de la première gouttelette (A ; 4A) à la deuxième gouttelette (B ; 4B).

7. Procédé selon la revendication 5 ou 6 et comprenant l'induction d'un gradient électrochimique ou chimique à travers la bicouche d'interface de gouttelette pour favoriser le transfert de la première espèce de soluté (22) de la première gouttelette (A ; 4A) à la deuxième gouttelette (B ; 4B).

8. Procédé selon la revendication 5, 6 ou 7 et comprenant la promotion thermique ou optique du transfert de la première espèce de soluté (22) de la première gouttelette (A ; 4A) à la deuxième gouttelette (B ; 4B).

9. Procédé selon la revendication 5, 6, 7 ou 8 et comprenant la fourniture d'un gradient de champ magnétique à travers la bicouche d'interface de gouttelette pour favoriser le transfert de la première espèce de soluté (22) de la première gouttelette (A ; 4A) à la deuxième gouttelette (B ; 4B).

**10.** Procédé selon l'une quelconque des revendications précédentes, dans lequel la deuxième gouttelette (B ; 4B) contient un fluide d'une deuxième composition comprenant une troisième espèce de soluté, et une seconde espèce de transporteur pour favoriser le passage à travers la bicouche d'interface de gouttelette de molécules de la troisième espèce de soluté est fournie dans la première gouttelette (A ; 4A) et/ou dans la deuxième gouttelette (B ; 4B), permettant ainsi à la troisième espèce de soluté de passer de la deuxième gouttelette (B ; 4B) à la première gouttelette (A ; 4A) via la bicouche d'interface de gouttelette.

**11.** Procédé selon l'une quelconque des revendications précédentes, comprenant, tout en actionnant les électrodes d'électromouillage pour amener les première et deuxième gouttelettes à entrer en contact l'une avec l'autre pour former la bicouche d'interface de gouttelettes (10), l'actionnement supplémentaire des électrodes d'électromouillage pour :

amener une troisième gouttelette à entrer en contact avec la première gouttelette (A ; 4A) pour former une seconde bicouche d'interface de gouttelette, la troisième gouttelette contenant un fluide d'une troisième composition différente de la première composition, la troisième composition ayant une pression osmotique identique ou similaire à celle de la première composition, dans lequel une seconde espèce de transporteur pour favoriser le passage à travers la deuxième bicouche d'interface de gouttelette d'une quatrième espèce de soluté est fournie dans la première gouttelette (A ; 4A) et/ou dans la troisième gouttelette, et
maintenir les première et troisième gouttelettes en contact l'une avec l'autre pour maintenir la deuxième bicouche d'interface de gouttelette et permettre ainsi à la quatrième espèce de soluté de passer de la première gouttelette (A ; 4A) à la troisième gouttelette via la seconde bicouche d'interface de gouttelette.

**12.** Procédé selon l'une quelconque des revendications 1 à 12, comprenant, tout en actionnant les électrodes d'électromouillage pour amener les première et deuxième gouttelettes à entrer en contact l'une avec l'autre pour former une bicouche d'interface de gouttelettes, l'actionnement supplémentaire sélectif des électrodes d'électromouillage pour :

amener une troisième gouttelette à entrer en contact avec la deuxième gouttelette (B ; 4B) pour former une seconde bicouche d'interface de gouttelette, la troisième gouttelette contenant un fluide d'une troisième composition différente de la première composition, la troisième composition ayant une pression osmotique identique ou similaire à celle de la première composition, dans lequel une espèce de transporteur pour favoriser le passage à travers la seconde bicouche d'interface de gouttelette de la première espèce de soluté est fournie dans la deuxième gouttelette (B ; 4B) et/ou dans la troisième gouttelette, et
maintenir les deuxième et troisième gouttelettes en contact l'une avec l'autre pour maintenir la seconde bicouche d'interface de gouttelette et permettre ainsi à la première espèce de soluté de passer de la première gouttelette (A ; 4A) à la deuxième gouttelette (B ; 4B) via la bicouche d'interface de gouttelette (10) et de la deuxième gouttelette (B ; 4B) à la troisième gouttelette via la seconde bicouche d'interface de gouttelette.

**13.** Procédé selon une quelconque revendication précédente, comprenant en outre l'actionnement sélectif des électrodes d'électromouillage pour :
récupérer la deuxième gouttelette (B ; 4B).

Figure 1

Figure 2

Figure 3

<u>1</u>

Computer
3b

Software
3c

Data link 7

Electrode
Control
Electronics
3
3a

Electrical
Connector
8

Actuation data
Signals  5

Sensor data signals
9

Droplet 4

Electrode array
38

2

Figure 4a

Figure 4b

Figure 5

Droplet A
Lower solute
osmolarity

Droplet B
Higher solute
osmolarity

10

Droplet A          Droplet B

H$_2$O
transport

Droplets A' and B'
have the same
solute osmolarity

Droplet A' – the solute is
concentrated relative to
droplet A

Droplet B'

(i)                    (ii)                    (iii)                    (iv)

Figure 6

Droplet B
Droplet B'
Second droplet B"
Droplet B'''

DIB formation
Osmosis
DIB breaking

Droplet A

Droplet A'

DIB formation
Osmosis
DIB breaking

Droplet A''

Figure 7

(i)                                  (ii)                                  (iii)

Figure 8

Droplet A    Droplet B1    Droplet B2

Solvent transport through DIB

Droplet A'    Droplet B1'    Droplet B2'

Droplets separated by electro-wetting

Droplet B2'

Droplet A'    Droplet B1'

Outcome: solute in droplet A is concentrated

(i)                    (ii)                    (iii)

Figure 9

# Figure 10

Fig. 10a

Droplet A  Droplet B  10

36
18
16
20
72

28
26
32
34

38A  38B

Fig. 10b

Droplet A'  Droplet B'

Fig. 10c

Droplet A'  Droplet B'

Figure 11

Figure 12

(a)

(b)

(c)

(d)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6911132 B, Pamula
- US 6565727 B, Shenderov
- US 7163612 B, Sterling
- EP 2047266 A
- US 2018356430 A
- WO 2018067878 A
- GB 1721649 A

### Non-patent literature cited in the description

- **R. B. FAIR**. Digital microfluidics: is a true lab-on-a-chip possible?. *Microfluid Nanofluid*, 2007, vol. 3, 245-281
- **A MARTEL et al.** Handling of artificial membranes using electrowetting-actuated droplets on a microfluidic device combined with integrated pA-measurements. *BIOMICROFLUDICS*, 2012, vol. 6 (1), 012813
- *Sensors and Actuators B: Chemical*, 2013, vol. 185, 530-542
- **H FINDLAY**. In vitro synthesis of Major Facilitator Transporter for specific active transport across Droplet Interface Bilayers. *Scientific Reports*, 2016, vol. 6 (39349), 1-9
- *Biomicrofluidics*, 2012, 012813
- *Cryst Eng Comm*, 2012, vol. 14 (23), 7865-7868
- **MANISH KUMAR** ; **MARIUSZ GRZELAKOWSKI** ; **JULIE ZILLES** ; **MARK CLARK** ; **WOLFGANG MEIER**. Highly permeable polymeric membranes based on the incorporation of the functional water channel protein Aquaporin Z.. *Proceedings of the National Academy of Sciences*, 2007, vol. 104, 20719-20724
- **CHO SK** ; **MOON H** ; **KIM C-J**. Creating, transporting, cutting, and merging liquid droplets by electrowetting-based actuation for digital microfluidic circuits.. *J Microelectromech Syst.*, 2003, vol. 12, 70-80
- **HEATHER E. FINDLAY** ; **NICOLA J. HARRIS** ; **PAULA J. BOOTH**. In vitro synthesis of a Major Facilitator Transporter for specific active transport across Droplet Interface Bilayers. *Scientific Reports*, 2016, vol. 6, 39349